# EUROPEAN PATENT APPLICATION

(11) **EP 3 611 374 A1**
(43) Date of publication of application: **19.02.2020**
(21) Application number: 19187415.5
(22) Date of filing: 19.07.2019
(51) Int. Cl.: F03G 7/00, F16H 25/06

(54) **ROTARY ACTUATOR**

(30) Priority: 17.08.2018 US 201816104589
(71) Applicant: Rosemount Aerospace Inc., Burnsville, MN 55306-4898 (US)
(72) Inventor: RIEHLE, Owen, Orange, CA 92867 (US); SOBIESZEK, Maciej, 52-211 Wroclaw (PL); SOLARZ, Bartosz, 50-262 Wroclaw (PL); KUROWSKA, Agata, 80-180 Kowale (PL); KWASNIEWSKI, Pawel, 55-200 Olawa (PL); SOBANSKA, Aneta, 52-200 Wysoka (PL); WILK, Tomasz, 51-114 Wroclaw (PL)
(74) Representative: Dehns

(57) **Abstract**

There is described an actuator (100) for driving a rotatable component, comprising a first member (130) comprising a screw thread and rotatable about an axis (X), a second member (180) comprising a screw thread configured to cooperate with the screw thread on the first, rotating member (130), wherein the second member (180) is restrained against rotational movement about the axis (X) such that rotation of said first member (130) causes movement of said second member (180) along the axis (X), and the second member (180) comprises one or more helical grooves (190), and a third member (200) rotatable about the axis (X) and restrained against axial movement, wherein the third member (200) comprises one or more helical rails (220), each configured to ride within a respective one of the helical grooves (190) such that movement of the second member (180) along the axis (X) causes rotational movement of the third member (200) about the axis (X).

## Description

### FIELD

The present disclosure relates generally to an actuator for driving a rotatable component.

### BACKGROUND

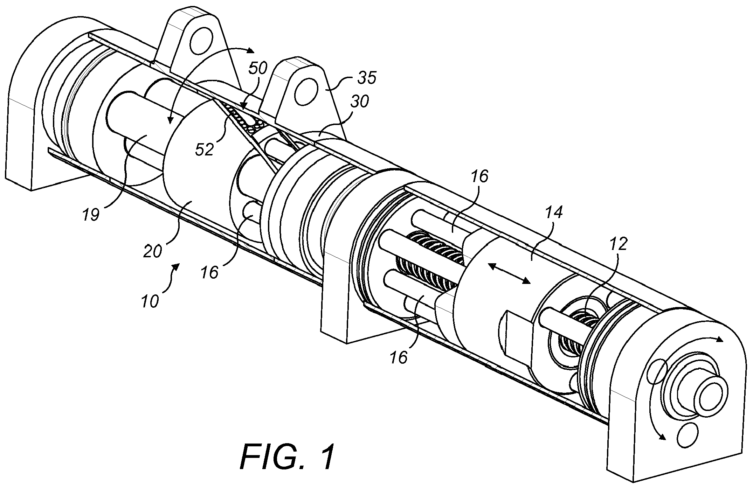

Fig. 1 shows a conventional actuator 10 that is configured to rotate a component (not shown). The actuator 10 may comprise an electric motor (not shown) that is configured to rotate a first member, in the form of ball screw 12. A second member, comprising nut 14 is threaded to said ball screw and is moveable in the longitudinal direction. Rotation of the screw 12 causes nut 14 to move longitudinally along the length of the screw 12.

The second member comprises one or more moveable rods 16 fixed to the nut 14 that extend in a longitudinal direction, through an intermediate housing 18 of the actuator 10. The one or more rods 16 may be coupled with a third member in the form of a slider 20 that forms part of the second member as well. The slider 20 moves in the axial or longitudinal direction along one or more fixed rods 19.

Upon rotation of the screw 12, the nut 14 moves in the axial or longitudinal direction. This causes moveable rods 16 and slider 20 to also move in the axial or longitudinal direction.

A fourth, rotating member, in the form of a sleeve 30 may be coupled to the slider 20 via a bearing system 50. The bearing system 50 comprises one or more roller bearings 52 that move with the slider 20. The roller bearings 52 are configured to contact a helical track 54. Upon axial movement of the slider 20, the roller bearings 52 move along the helical track. Due to the helical nature of the track, this causes the roller bearings 52 to push against the track and rotate the sleeve 30.

The sleeve 30 has actuator arms 35 connected to it, and rotation of the sleeve 30 causes actuator arms 35 to rotate as well. The actuator arms 35 may comprise part of, or be coupled to, a rotatable component, for example an aircraft flight control system element such as one or more ailerons and/or elevators and/or rudders. In this manner, the actuator drives the rotatable component.

Although the actuator 10 has various benefits, for example a high load carrying capacity and high efficiency, it is desired to provide a compact actuator that is able to achieve rotation of a rotatable component with a reduced axial length. Furthermore, it is desired to provide a rotatable actuator that is relatively inexpensive.

### SUMMARY

In accordance with an aspect of the disclosure, there is provided an actuator for driving a rotatable component. The actuator comprises a first member comprising a screw thread and rotatable about an axis, and a second member comprising a screw thread configured to cooperate with the screw thread on the first member. The second member is restrained against rotational movement about the axis such that rotation of said first member causes movement of said second member along the axis, and the second member comprises one or more helical grooves. The actuator further comprises a third member rotatable about the axis and restrained against axial movement, wherein the third member comprises one or more helical rails, each configured to ride within a respective one of the helical grooves such that movement of the second member along the axis causes rotational movement of the third member about the axis.

This provides a relatively compact and inexpensive rotary actuator as compared to conventional arrangements.

The actuator may further comprise a motor, e.g., an electric motor configured to drive the first member.

A pitch of the helical rails may be at least 10, 20, 30, 40 or even 50 times greater than a pitch of the screw thread on the first member and/or the second member. This can provide an additional, or alternative mechanism for transmitting the relatively small torque of a driving motor or screw shaft to a relatively large torque for rotating the third member.

The second member may be located concentrically around the first member. The third member may be located concentrically around the first member and the second member. Providing the first, second and third members in a concentric arrangement in this manner leads to a particularly compact arrangement that makes efficient use of space.

The actuator may further comprise one or more rods that are fixed against rotational movement, wherein the second member may be threaded onto the one or more rods such that the rods restrain the second member against rotational movement about the axis. The one or more rods may comprise at least a pair of rods located on opposite sides of the axis. Each of the one or more rods may be arranged parallel to the axis.

The second member may comprise an outer cylindrical surface and the helical grooves may be located in the outer cylindrical surface of the second member.

The actuator may further comprise opposed first and second mounting elements, wherein the first member, second member and third member may be located between the first and second mounting elements.

A portion of the first member at a first axial end thereof may be held between one or more bearings of the first mounting apparatus, and a portion of the first member at a second, opposite axial end thereof may be held between one or more bearings of the second mounting apparatus, such that the first member is held rotatably by the first and second mounting apparatus.

The third member may comprise a substantially cylindrical tube extending between the first and second mounting elements.

The one or more helical rails may be located on an inner cylindrical surface of the third member.

The cooperating screw threads of the first member and the second member, the helical grooves of the second member and the helical rails of the third member may all located in a volume defined by the inner cylindrical surface of the third member.

In various embodiments a reduction gearbox may be configured to transmit drive to the first member and rotate the first member about the axis. This can provide a mechanism for transmitting the relatively small torque of a driving motor to a relatively large torque for rotating the third member.

### BRIEF DESCRIPTION OF THE DRAWINGS

Various embodiments will now be described, by way of example only, and with reference to the accompanying drawings in which:
Fig. 1 shows a conventional actuator;
Fig. 2 shows an actuator in accordance with an embodiment of the present disclosure, with a portion that is cut away to show the inner components thereof;
Fig. 3 shows a cross-section of the actuator of Fig. 2; and
Fig. 4 shows an exploded view of the actuator of Fig. 2.

### DETAILED DESCRIPTION

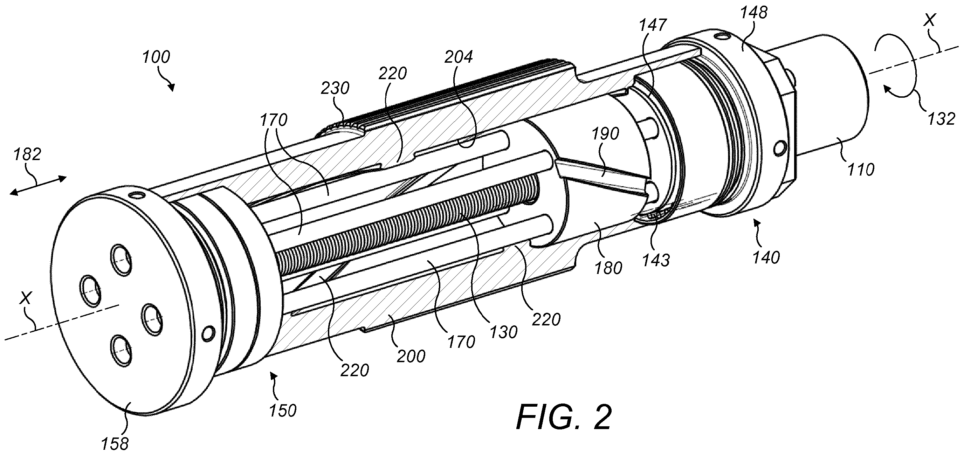

Herewith will be described various embodiments of an actuator for driving a rotatable component. An example of such an actuator is shown in Fig. 2.

Fig. 2 shows an actuator 100 for driving a rotatable component (not shown). The actuator 100 comprises a motor 110, which may be a DC motor although any suitable type of motor may be used. In addition, although a motor 110 is shown in the example any suitable drive mechanism may be used.

The actuator 100 may further comprise a gearbox (not shown) configured to transmit drive from the motor 110 to a component of the actuator 100 (e.g., screw shaft 130 as described below). The gearbox may be a planetary gearbox, although any suitable type of gearbox may be used. The gearbox may be configured to provide a geared reduction of the drive from the motor 110 such that the rotational rate of the motor 110 is reduced when the drive is transmitted through the gearbox to the component of the actuator 100.

The actuator 100 comprises a first member or screw shaft 130 operatively connected to the motor 110 (e.g., via the gearbox), and driven by the motor 110, such that driving the motor 110 causes a rotational movement of the screw shaft 130, for example in the direction of arrow 132. The screw shaft 130 is optionally coincident with a central, longitudinal axis X of the actuator, and may be rotatable around this axis X as well. The screw shaft 130 comprises a screw thread around an outer cylindrical surface thereof and extends from a first axial end 132 to a second, opposite axial end 134.

The actuator 100 may comprise a first mounting apparatus 140 that is mounted to the gearbox and configured to remain stationary during operation of the actuator 100. The first mounting apparatus 140 may be located at a first axial end of the screw shaft 130 and configured to receive a portion of the screw shaft 130 as described in more detail below.

The actuator 100 may further comprise a second mounting apparatus 150, such that the second mounting apparatus 150 is configured to remain stationary during operation of the actuator 100. The second mounting apparatus 150 may be located at the second axial end of the screw shaft 130 and configured to receive a portion of the screw shaft 130 as described in more detail below.

The actuator 100 further comprises one or more rods 170 that extend between the first mounting apparatus 140 and the second mounting apparatus 150, wherein the one or more rods 170 are secured to the mounting apparatus 140, 150 such that they are fixed in position relative thereto and remain stationary during operation of the actuator 100.

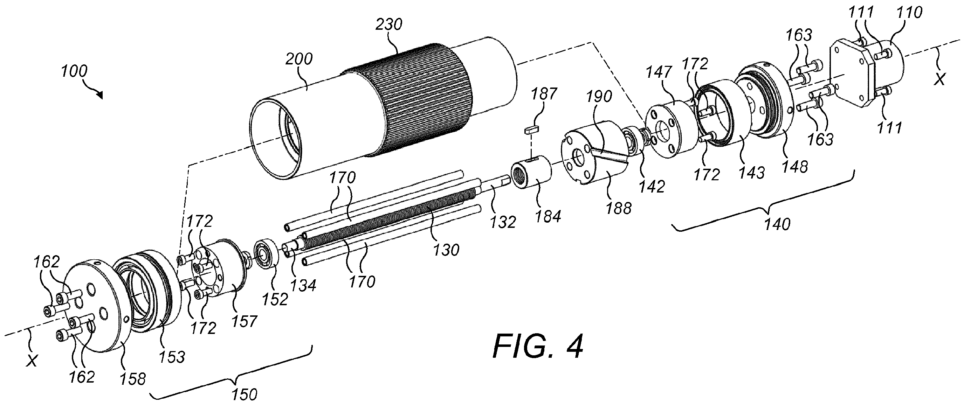

In the illustrated embodiment, four rods 170 are shown (see Fig. 4) and are located parallel to each other and such that they form two diagonally opposite pairs located around the central, longitudinal axis X of the actuator 100. Although this may be an optimum arrangement, in the broadest aspects of the present disclosure any number of rods 170 may be provided to achieve the technical effects described herein.

The actuator 100 further comprises a second member or nut 180 that cooperates with the screw shaft 130 and is operatively connected thereto such that rotation of the screw shaft 130 causes axial movement of the nut 180 in the direction of arrow 182. The nut 180 is threaded onto each of the one or more rods 170, such that the rods 170 restrict movement of the nut 182 axial movement in the direction of arrow 182, and prevent rotational movement of the nut 180.

The actuator 100 further comprises a third member or sleeve 200, a portion of which is cut away in Fig. 2 to show other components of the actuator 100. The sleeve 200 is located concentrically around the longitudinal axis X of the actuator 100, and comprises one or more helical rails 220 located on an inner cylindrical surface 204 of the sleeve 200.

In various embodiments (and as shown in Fig. 2), a pitch of the helical rails 220 is much higher than a pitch of the screw thread on the screw shaft 130. For example, the pitch of the helical rails 220 may be at least 50 times greater than the pitch of the screw thread on the screw shaft 130.

The sleeve 200 is rotatably mounted between the first mounting apparatus 140 and the second mounting apparatus 150 such that it can rotate about the longitudinal axis X. In various embodiments, the sleeve 200 may be attached to a rotatable component, such that rotation of the sleeve 200 causes rotation of the components to which it is attached. In the illustrated embodiment the sleeve 200 comprises a splined connection comprising a plurality of splines 230 onto which a component may be attached, wherein the component may have a corresponding set of splines to mate with the splines 230 of the sleeve 200. Alternatively, or additionally, the sleeve 200 may comprise a clevis for attachment to a component.

The nut 180 comprises one or more grooves 190, each configured to receive a respective one of the rails 220. The rails 220 are configured to ride in the grooves 190 as the nut 180 moves in the axial direction as indicated by arrow 182, which causes the sleeve 200 to rotate about the longitudinal axis X. This, in turn, causes rotation of a component to which the sleeve 200 may be attached.

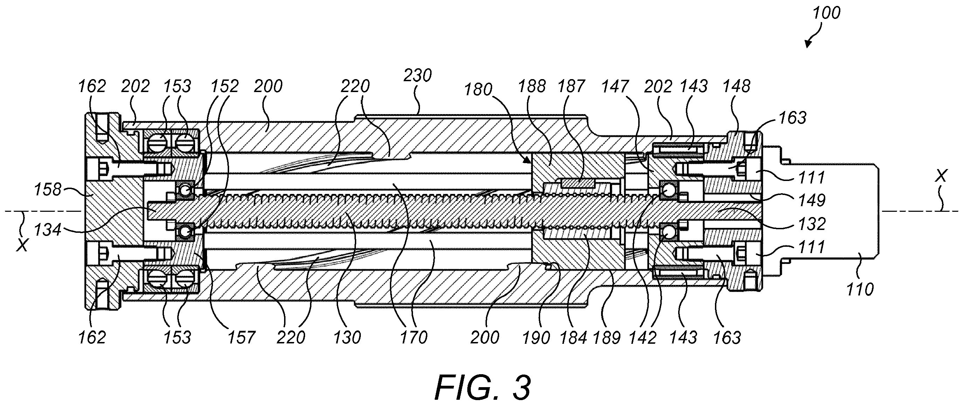

Fig. 3 shows a cross-section of the actuator 100, from which it can be seen how the screw shaft 130 may be mounted to the first mounting apparatus 140 and second mounting apparatus 150.

The first mounting apparatus 140 comprises a first member 147 located concentrically around the screw shaft 130, as well as a second member 148 that is also located concentrically around the screw shaft 130 and is fastened to the first member 147 using one or more fasteners 163. The second member 148 comprises an internal bore 149 that permits the screw shaft 130 to pass therethrough for operable connection to the motor 110. The motor 110 is fastened to the second member 148 using one or more fasteners 111, and encloses the actuator 100 at the first end 132 of the screw shaft 130.

The second mounting apparatus 150 comprises a first member 157 located concentrically around the screw shaft 130, as well as a second member 158 that is fastened to the first member 157 using one or more fasteners 162. The second member 158 is provided in the form of a cap that encloses the actuator 100 at the second end 134 of the screw shaft 130.

A portion of the screw shaft 130 at the first axial end 132 thereof may be held between one or more bearings 142 of the first mounting apparatus 140, such that the screw shaft 130 is rotatable relative to the first mounting apparatus 140. These bearings 142 are located between the screw shaft 130 and the first member 147 of the first mounting apparatus 140.

Similarly, a portion of the screw shaft 130 at a second, opposite axial end 134 thereof may be held between one or more bearings 152 of the second mounting apparatus 150, such that the screw shaft 130 is rotatable relative to the second mounting apparatus 150. These bearings 152 are located between the screw shaft 130 and the first member 157 of the second mounting apparatus 150.

The nut 180 may comprise a first portion 184 comprising a screw thread configured to cooperate with the screw thread on the screw shaft 130, such that rotation of the screw shaft 130 causes the screw threads to cooperate and translate the nut 180 in the axial direction 182.

The nut 180 may further comprise a second portion 188 in the form of a sleeve that is connected to and axially movable with the first portion 184. The second portion 188 may comprise the one or more grooves 190 on an outer cylindrical surface 189 thereof. The nut 180 may comprise a locking piece 187 configured to lock the first portion 184 axially and rotationally with respect to the second portion 188.

The sleeve 200 of the actuator 100 may be rotatably mounted to the first and second mounting apparatus 140, 150 as described above, and as shown in Fig. 3 the sleeve 200 may be provided in the form of a substantially cylindrical tube having end portions 202. The end portions 202 are substantially annular and are located around respective bearings 143, 153 of the first and second mounting apparatus 140, 150 respectively.

Fig. 4 shows an exploded view of the actuator 100 (along axis X), which shows the various components referred to above. The sleeve 200 is offset from the remainder of the components for clarity purposes. From Fig. 4 it can be seen that the one or more rods 170 are fastened to the first and second mounting apparatus 140, 150 using one or more fasteners 172 that secure the rods 172 respective first members 147, 157 of the first and second mounting apparatus 140, 150 respectively.

It will be appreciated that aspects of the present disclosure lead to a rotary actuator that is relatively inexpensive and more compact than conventional arrangements. In various refinements, the inclusion of a reduction gearbox between the motor 110 and the screw shaft 130 (in particular a planetary gearbox) can mean that the torque of the motor 110 is able to translate the nut 180 (via the gearbox and screw shaft 130) easily and without use of further, additional components.

Although the present disclosure has been described with reference to various embodiments, it will be understood by those skilled in the art that various changes in form and detail may be made without departing from the scope of the invention as set forth in the accompanying claims.

## Claims

1. An actuator (100) for driving a rotatable component, comprising:
a first member (130) comprising a screw thread and rotatable about an axis (X);
a second member (180) comprising a screw thread configured to cooperate with the screw thread on the first member (130), wherein the second member (180) is restrained against rotational movement about the axis (X) such that rotation of said first member (130) causes movement of said second member (180) along the axis (X), and the second member (180) comprises one or more helical grooves (190); and
a third member (200) rotatable about the axis (X) and restrained against axial movement, wherein the third member (200) comprises one or more helical rails (220), each configured to ride within a respective one of the helical grooves (190) such that movement of the second member (180) along the axis (X) causes rotational movement of the third member (200) about the axis (X).

2. An actuator as claimed in claim 1, further comprising a motor (110) configured to drive the first member (130).

3. An actuator as claimed in claim 2, wherein the motor (110) is an electric motor.

4. An actuator as claimed in claim 1, wherein a pitch of the helical rails (220) is at least 50 times greater than a pitch of the screw thread on the first member (130) and/or the second member (180).

5. An actuator as claimed in claim 1, wherein the second member (180) is located concentrically around the first member (130).

6. An actuator as claimed in claim 1, wherein the third member (200) is located concentrically around the first member (130) and the second member (180).

7. An actuator as claimed in claim 1, further comprising one or more rods (170) that are fixed against rotational movement, wherein the second member (180) is threaded onto the one or more rods (170) such that the rods (170) restrain the second member (180) against rotational movement about the axis (X).

8. An actuator as claimed in claim 7, wherein the one or more rods (170) comprises at least a pair of rods (170) located on opposite sides of the axis (X).

9. An actuator as claimed in claim 7 or 8, wherein each of the one or more rods (170) is arranged parallel to the axis (X).

10. An actuator as claimed in claim 1, wherein the second member (180) comprises an outer cylindrical surface (189) and the helical grooves (190) are located in the outer cylindrical surface (189) of the second member (180).

11. An actuator as claimed in claim 1, further comprising opposed first and second mounting elements (140,150), wherein the first member (130), second member (180) and third member (200) are located between the first and second mounting elements (140,150).

12. An actuator as claimed in claim 11, wherein a portion of the first member (130) at a first axial end (132) thereof is held between one or more bearings (142) of the first mounting apparatus (140), and a portion of the first member (130) at a second, opposite axial end (134) thereof is held between one or more bearings (152) of the second mounting apparatus (150), such that the first member (130) is held rotatably by the first and second mounting apparatus (140,150).

13. An actuator as claimed in claim 11 or 12, wherein the third member (200) comprises a substantially cylindrical tube extending between the first and second mounting elements (140,150).

14. An actuator as claimed in claim 13, wherein the one or more helical rails (220) are located on an inner cylindrical surface of the third member (200).

15. An actuator as claimed in claim 14, wherein the cooperating screw threads of the first member (130) and the second member (180), the helical grooves (190) of the second member (180) and the helical rails (220) of the third member (200) are all located in a volume defined by the inner cylindrical surface of the third member (200).
